(19) Europäisches Patentamt
European Patent Office
Office européen des brevets

(11) EP 3 670 184 A1

(12) # EUROPÄISCHE PATENTANMELDUNG

(43) Veröffentlichungstag:
**24.06.2020 Patentblatt 2020/26**

(21) Anmeldenummer: **18214857.7**

(22) Anmeldetag: **20.12.2018**

(51) Int Cl.:
***B32B 27/34*** *(2006.01)* ***B32B 1/08*** *(2006.01)*
***C08K 5/3492*** *(2006.01)* ***C08K 5/523*** *(2006.01)*
***C08L 77/02*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **EMS-Patent AG**
**7013 Domat/Ems (CH)**

(72) Erfinder: **CAVIEZEL, Heinz**
**7425 Masein (CH)**

(74) Vertreter: **Pfenning, Meinig & Partner mbB**
**Patent- und Rechtsanwälte**
**Theresienhöhe 11a**
**80339 München (DE)**

(54) **FLUIDTRANSPORTLEITUNG UND DEREN VERWENDUNG**

(57) Die Erfindung betrifft eine Fluidtransportleitung, die eine innere, mit einem Fluid in Kontakt tretende Schicht aus mindestens einem aliphatischem Polyamid und mindestens einem Schlagzähmodifikator sowie mindestens eine äußere Schicht, die mit der inneren Schicht unmittelbar verbunden ist und aus einem aliphatischen Polyamid und mindestens einem Flammschutzmittel gebildet ist. Während die innere Schicht die chemische Beständigkeit gegenüber den zu transportierenden Fluiden und die mechanische Beständigkeit gewährleistet, wird durch die äußere Schicht die Flammbeständigkeit sichergestellt.

EP 3 670 184 A1

## Beschreibung

Die Erfindung betrifft eine Fluidtransportleitung, die eine innere, mit einem Fluid in Kontakt tretende Schicht aus mindestens einem aliphatischem Polyamid und mindestens einem Schlagzähmodifikator sowie mindestens eine äußere Schicht, die mit der inneren Schicht unmittelbar verbunden ist und aus einem aliphatischen Polyamid und mindestens einem Flammschutzmittel gebildet ist. Während die innere Schicht die chemische Beständigkeit gegenüber den zu transportierenden Fluiden und die mechanische Beständigkeit gewährleistet, wird durch die äußere Schicht die Flammbeständigkeit sichergestellt.

Der Transport von Flüssigkeiten, insbesondere im Automobilbereich, erfordert den Einsatz spezifischer Materialien. Je nach Material und Anforderung müssen derartige Transportleitungen eine Reihe an Prüfungen bestehen. Besonders beim Transport von Kühlmitteln sind die zu erfüllenden Anforderungen streng. Die Zufuhr von wässrigen Lösungen, in der Regel Wasser-Glykol-Mischung, verlangt eine Hydrolyse-Beständigkeit der Komponenten, die mit den wässrigen Lösungen in Kontakt treten.

Besonders hohe Anforderungen betreffen auch den Elektro-Automobilbereich. So sind die elektrochemischen Reaktionen einen Lithium-Ionen-Batterie nur in einem definierten Temperaturbereich möglich. Solche Akkumulatoren in einem Elektroauto arbeiten in der Regel in einem Temperaturbereich von 20 bis 30° C. Sofern eine Temperatur von 30° C überschritten wird, nimmt die Alterung einer solchen Batterie exponentiell zu. Bei Temperaturen ab 40° C kann auch eine bleibende Schädigung der Batterie eintreten. Zudem kann eine Überhitzung der Batterie zu einer Brandgefahr führen, die zu unerwünschten Schäden im Fahrzeug führen kann.

In der Regel bestehen solche Leitungen aus flammgeschützten Materialien oder weisen zumindest Schichten mit einem Flammschutzmittel auf. Eine solche mehrschichtige Leitung ist aus EP 1 265 749 bekannt, indem eine flammgeschützte Schicht auf Basis von Polyolefinen verwendet wird.

Aus JP 1269536 ist eine flexible Leitung auf Basis von Polyamid bekannt. Diese Leitung hat einen zweischichtigen Aufbau, wobei die äußere Schicht aus PA11 bzw. PA12 und die innere Schicht aus einem flammgeschützten elastomeren Copolyamid gebildet ist.

Bei einem solchen mehrschichtigen Aufbau werden in der Regel Haftvermittlerschichten eingesetzt, um die Verbindung zwischen dem flammgeschützten Material und dem Kernmaterial zu ermöglichen. Dies führt dann aber zwingend zu einer komplexeren Fertigung dieser Bauteile und einem höheren Gewicht der Bauteile. Die Gewichtsreduzierung solcher Bauteile, insbesondere bei Anwendungen in der Automobilindustrie, ist ein besonders wichtiger Aspekt in der Fertigung.

Ausgehend hiervon war es Aufgabe der vorliegenden Erfindung Fluidtransportleitungen bereitzustellen, die die aus dem Stand der Technik bekannten Nachteile überwinden und eine gute Chemikalien-Beständigkeit gegenüber dem zu transportierenden Fluid aufweisen, bei gleichzeitig guten mechanischen und Flammschutz-Eigenschaften und einem geringen Gewicht der Fluidleitungen. Zudem soll der Aufwand bei der Herstellung dieser Leitungen so gering wie möglich gehalten werden.

Diese Aufgabe wird durch die Fluidtransportleitung mit den Merkmalen des Anspruchs 1 und die Verwendung dieser Fluidtransportleitung mit den Merkmalen des Anspruchs 16 gelöst. Die weiteren abhängigen Ansprüche zeigen vorteilhafte Ausführungsformen auf.

Erfindungsgemäß wird eine Fluidtransportleitung bereitgestellt, die folgende Schichten enthält:

- eine innere, mit einem Fluid in Kontakt tretende Schicht gebildet aus einer mindestens ein aliphatisches Polyamid und mindestens einen Schlagzähmodifikator enthaltenden Formmasse, wobei das mindestens eine Polyamid eine Aminendgruppenkonzentration von 30 bis 90 mmol/kg aufweist, und
- mindestens eine äußere, mit der inneren Schicht unmittelbar verbundene Schicht gebildet aus einer mindestens ein aliphatisches Polyamid enthaltenden Formmasse mit mindestens einem Flammschutzmittel.

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im Folgenden synonym zu den IUPAC Namen der Monomere verwendet.

Es ist bevorzugt, dass die Polyamide der inneren und äußeren Schicht ausgewählt sind aus der Gruppe bestehend aus PA12, PA612, PA1010, PA106, PA1016, PA1012, PA 614, PA 615, PA616, PA618, PA1212, PA610, PA11 und deren Copolyamiden, Mischungen und Blends, bevorzugt PA12, PA11, PA610, PA612 und PA11, besonders bevorzugt PA12, wobei die innere und äußere Schicht bevorzugt Polyamide des gleichen Typs enthalten.

Vorzugsweise weisen die Polyamide eine Amino-Endgruppenkonzentration von 30 bis 80 mmol/kg, bevorzugt von 35 bis 75 mmol/kg und besonders bevorzugt von 40 - 60 mmol/kg auf. Die Bestimmung der Endgruppenkonzentration erfolgt dabei potentiometrisch. Bevorzugt ist die Amino-Endgruppenkonzentration größer als die Carboxyl-Endgruppenkonzentration.

Eine bevorzugte Ausführungsform sieht vor, dass das mindestens eine Flammschutzmittel ein halogenfreies Flammschutzmittel ist. Hierbei sind organische Flammschutzmittel besonders bevorzugt. Insbesondere werden Flammschutzmittel eingesetzt, die aus der Gruppe bestehend aus

- Umsetzungsprodukten von Melamin mit Cyanursäure,
- Kondensationsprodukte von Melamins, insbesondere Melem, Melam, Melon,
- Umsetzungsprodukte von Melamin mit Polyphosphorsäure,
- Umsetzungsprodukte von Kondensationsprodukten des Melamins mit Polyphosphorsäure
- Metallphosphinate
- Phosphorsäureester

und/oder Mischungen hiervon ausgewählt sind.

Insbesondere ist das Flammschutzmittel ausgewählt aus der Gruppe bestehend aus Melamincyanurat, Melaminphosphat, Melaminpyrophosphat, Melaminpolyphosphat, Melemphosphat, Melempyrophosphat, Dimelaminpyrophosphat, Dimelaminphosphat, Melonpolyphosphat, Phosphaphenanthrene und Mischungen hiervon.

Vorzugsweise ist das wenigstens eine Metallphosphinat ausgewählt aus der Gruppe der Phosphinsäuresalze, Diphosphinsäuresalze und Kombinationen hiervon. Besonders bevorzugt handelt es sich um ein Phosphinsäuresalz der allgemeinen Formel (I)

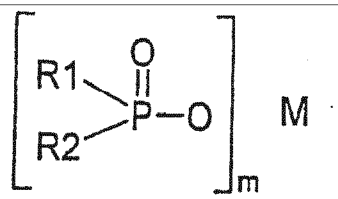
(I)

und/oder Formel (II)

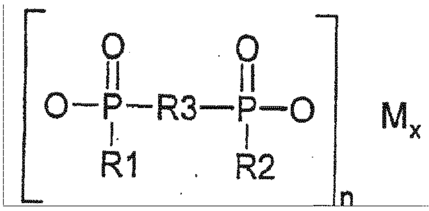
(II)

und/oder deren Polymere
worin

| | |
|---|---|
| R1, R2 | gleich oder verschieden sind und bevorzugt C1-C8-Alkyl, linear oder verzweigt und/oder Aryl sind; |
| R3 | C1-C10-Alkylen, linear oder verzweigt, C6-C10-Arylen, -Alkylarylen oder Arylalkylen sind; |
| M | ein Metallion aus der 2. oder 3. Haupt- oder Nebengruppe des Periodensystems ist; und |
| m | 2 oder 3; |
| n | 1 oder 3; |
| x | 1 oder 2 |

bedeuten. Als Metallion M wird bevorzugt Al, Ca und Zn eingesetzt.

Die äußere Schicht enthält dabei vorzugsweise von 5 bis 30 Gew.-%, bevorzugt 10 bis 25 Gew.-%, besonders bevorzugt 11 bis 20 Gew.-%, jeweils bezogen auf das Gewicht der Formmasse, des mindestens einen Flammschutzmittels.

Es ist bevorzugt, dass der mindestens eine Schlagzähmodifikator ein funktionalisierter Schlagzähmodifikator ausgewählt aus der Gruppe bestehend aus Ethylen-Propylen-Copolymeren, Ethylen-I-Buten-Copolymeren, Ethylen-Propylen-I-Buten-Copolymeren, Stryol-Copolymeren, Styrol-Blockcopolymeren und Mischungen davon ist.

Der Schlagzähmodifikator kann durch Copolymerisation oder durch Pfropfen funktionalisiert werden. Im Sinne der vorliegenden Erfindung meint Funktionalisieren durch Copolymerisation den Einbau der funktionalisierenden Verbindung in die Hauptkette von Komponente (C) als Bestandteil dieser Hauptkette. Unter der Funktionalisierung von Komponente (C) durch Pfropfen wird hingegen das Anbinden der funktionalisierenden Verbindung an die Hauptkette

verstanden, so dass Seitenketten entstehen.

Vorzugsweise ist der mindestens eine Schlagzähmodifikator in einer Menge von 0,1 bis 30 Gew.-%, bevorzugt 5 bis 25 Gew.-%, besonders bevorzugt 10 bis 20 Gew.-% in der inneren Schicht enthalten.

Es ist weiter bevorzugt, dass die äußere Schicht weitere Additive ausgewählt aus der Gruppe bestehend aus

(i) 0 bis 15 Gew.-%, bevorzugt 2 bis 12 Gew.-%, besonders bevorzugt 4 bis 10 Gew.-% mindestens eines Weichmachers,
(ii) 0,1 bis 2 Gew.-%, bevorzugt 0,2 bis 1,5 Gew.-%, besonders bevorzugt 0,3 bis 1 Gew.-% mindestens eines Stabilisators, insbesondere eines Thermostabilisators,
(iii) 0 bis 5 Gew.-%, bevorzugt 0,1 bis 4 Gew.-%, besonders bevorzugt 0,2 bis 3,5 Gew.-% mindestens eines weiteren Additives ausgewählt aus der Gruppe bestehend aus UV-Stabilisatoren, Wärmeleitfähigkeitsadditiven, Flammschutzsynergisten, Verarbeitungshilfsstoffe, Gleitmittel, Farb- und Markierungsstoffen, anorganische Pigmente, organische Pigmente, IR-Absorber, Intumeszenzmitteln

und/oder Mischungen daraus enthält, wobei die Summe der Additive (i) bis (iii), bezogen auf das Gewicht der Formmasse, von 0,1 bis 22 Gew.-% beträgt.

Der Weichmacher der Komponente (i) ist vorzugsweise ausgewählt aus der Gruppe bestehend aus Amiden von Arylsulfonsäuren mit 2 bis 12 C-Atomen, Estern der p-Hydroxybenzoesäure mit 2-20 C-Atomen in der Alkoholkomponente, Phosphonaten oder Phosphaten aufgebaut, bevorzugt besteht der Weichmacher aus einem Arylsulfonamid.

Bevorzugte phosphorhaltige Weichmacher sind u.a. Diphenylkresylphosphat (Disflamol DPK), Tris(2-ethylhexyl)phosphat, Diphenyl-2-ethylhexylphosphat, Trikresylphosphat, Alkyl- oder Arylphosphonate, Diethylphosphonat oder zyklische Phosphonate, wie z.B. Aflammit PLF 710.

Bevorzugte Ester der 4-Hydroxybenzoesäure sind p-Hydroxybenzoesäureoctylester p-Hydroxybenzoesäureethylester, p-Hydroxybenzoesäure-i-hexadecylester, p-Hydroxybenzoesäure- 2-hexyldecylester.

Es ist bevorzugt, dass die die äußere Schicht bildende Formmasse eine relative Viskosität gemessen gemäß ISO 307 von 1,6 bis 1,9 und die die innere Schicht bildende Formmasse eine relative Viskosität gemessen gemäß ISO 307 von 1,8 bis 2,3 aufweist.

Die äußere Schicht weist vorzugsweise eine Dicke im Bereich von 0,1 bis 1,5 mm, bevorzugt von 0,12 bis 1,4 mm, besonders bevorzugt von 0,15 bis 1,3 mm auf.

Die Dicke der inneren Schicht bzw. Struktur ist in Abhängigkeit von der Art des Formteils, z. B. ein Rohr oder ein Schlauch abhängig und kann entsprechend gewählt werden. Bevorzugt sind hier Dicken im Bereich von 0.5 bis 2.5 mm, besonders bevorzugt von 0.75 bis 1.6 mm.

Weiterhin ist es bevorzugt, dass die Fluidtransportleitung keine Haftvermittlerschicht zwischen der inneren und äußeren Schicht aufweist und bevorzugt aus der inneren und äußeren Schicht besteht. Dies wird insbesondere dadurch erreicht, indem für die innere Schicht und die äußere Schicht die gleichen Polyamid-Typen, z.B. PA12, verwendet werden. Hierdurch wird eine eigenständige Haftung zwischen innerer und äußerer Schicht erreicht.

Als Fluid wird vorzugsweise eine Flüssigkeit, bevorzugt ein Kühlmittel und besonders bevorzugt ein Wasser-Alkohol-Gemisch, insbesondere eine Wasser-Glykol-Mischung, eingesetzt.

Vorzugsweise liegt die Fluidtransportleitung in Form eines Glattrohrs oder Wellrohrs vor.

Die Fluidtransportleitung ist vorzugsweise aus den Formmassen für innere und äußere Schichten durch Coextrusion, Blasformen und Spritzgießen herstellbar.

Verwendung findet die erfindungsgemäße Fluidtransportleitung für die Zufuhr eines Fluids oder einer Flüssigkeit, bevorzugt eine Art wässrigen Lösung, besonders bevorzugt eines Kühlmittels, insbesondere eines Wasser-Alkohol-Gemisches.

Dabei ist es bevorzugt, dass die Fluidtransportleitung für die Zufuhr eines Fluids in einen Motor oder in eine Batterie, insbesondere für Elektrofahrzeuge, verwendet wird.

Anhand der nachfolgenden Beispiele soll der erfindungsgemäße Gegenstand näher erläutert werden, ohne diesen auf die hier gezeigten spezifischen Ausführungsformen einschränken zu wollen.

In Tabelle 1 sind die in den Beispielen und Vergleichsbeispielen verwendeten Matrixmaterialien und deren Eigenschaften aufgeführt.

**Tabelle 1**

| | | PA (A) | PA(B) | PA (C) |
|---|---|---|---|---|
| PA 12 (i), ($\eta_{rel}$ =1.65) Aminendgruppe 45 mmol/kg | EMS-CHEMIE AG, Domat/Ems, Schweiz | | 78.1 | 70.95 |

(fortgesetzt)

| | | PA (A) | PA(B) | PA (C) |
|---|---|---|---|---|
| PA 12 (ii), ($\eta_{rel}$=2.1) | EMS-CHEMIE AG, Domat/Ems, Schweiz | 70.95 | | |
| Irganox 245 | BASF SE | 0.50 | 0.5 | 0.50 |
| Hostanox PAR24 | Clariant GmbH | | 0.2 | |
| Tinuvin 234 | BASF SE | 0.50 | | 0.50 |
| Disflamol DPK | Lanxess AG | 4.00 | | 4.00 |
| Tafmer MC201 | Mitsui Chemicals Inc., Tokio | | 20.0 | |
| FR-Masterbatch 1:1 PA12:Melamincyanurat | EMS-CHEMIE AG, Domat/Ems, Schweiz | 24.00 | | 24.00 |
| Mg-Stearat | Peter Greven, DE | 0.05 | | 0.05 |
| Farbe Masterbatch | EMS-CHEMIE AG, Domat/Ems, Schweiz | | 1.2 | |

Im Rahmen der vorliegenden Erfindung wurden folgende Messmethoden eingesetzt; falls nicht anders vermerkt wurden die Probenkörper in trockenem Zustand geprüft:

**Relative Viskosität**

Relative Viskosität wurde nach ISO 307 mit 0,5 g Polymer in 100ml eines geeigneten Lösemittels (z.B. m-Kresol für Polyamid 12) bei einer Temperatur von 20°C bestimmt.

**Extrusionsverfahren**

Rohre wurden auf einem Nokia Maillefer COEX5 Rohrextruder bei Massen-Temperaturen von 240- 250 °C unter Vakuum von 165 mbar und einer Extrusionsgeschwindigkeit von 9.5 m/min co-extrudiert. Als Prüfkörper wurden Rohre mit einen Außendurchmesser von 15 mm, Innendurchmesser 12 mm und Wandstärke von 1,5 mm eingesetzt.

**Flammschutz Prüfung:**

Brandeigenschaften der extrudierten Rohre wurden gemäß einer Modifikation der **UL-94** Messmethode gemessen. Prüflinge wurden bei 50% relativer Feuchtigkeit bei 23 °C für 48 Stunden oder 70 °C für 7 Tage vorgelagert. Für jeden Aufbau wurden mindestens drei Versuche durchgeführt.

Die extrudierten Rohre (Außendurchmesser 15 mm; Wanddicke 1,5 mm) wurden zu 150 mm Abschnitten gekürzt. Die Rohren wurden anschließend vertikal eingespannt und die Vertikalbrennprüfung durchgeführt.

**Pendelschlag**

Gemessen nach DIN 73378 bei 23 ±2 °C.

**Bestimmung der $NH_2$-Endgruppen mittels potentiometrischer Titration**

Zur Bestimmung der $NH_2$-Endgruppen des Polyamides werden 0,5 g Probe in 50 mL m-Kresol unter Rühren bei 100 °C gelöst. Nach Zugabe von 25 mL Isopropanol und 3 mL Zusatzlösung (6 g/L Aminocapronsäure in Eisessig) erfolgt die potentiometrische Titration mit 0.05 M ethanolischer PerchlorsäureLösung.

Die Berechnung der $NH_2$-Endgruppen erfolgt nach der Formel:

$$NH_2\ (mmol/kg): \qquad (a-b) * c * F * 1000 / E$$

mit

a Verbrauch in mL an 0,05 mol/L ethanolischer Perchlorsäure für die Probe mit Zusatzlösung
b Verbrauch in mL an 0,05 mol/L ethanolischer Perchlorsäure für die Zusatzlösung
c Konzentration der ethanolischen Perchlorsäure (0,05 mol/L)
F Faktor der 0,05 mol/L ethanolischen Perchlorsäure
E Polymer-Einwaage in g

In Tabelle 2 sind die mechanischen Eigenschaften und flammhemmenden Eigenschaften der erfindungsgemäßen Prüfkörper und der Vergleichsprüfkörper gegenübergestellt.

**Tabelle 2**

| | | B1 | B2 | B3 | VB1 | VB2 | VB3 |
|---|---|---|---|---|---|---|---|
| Außenschicht (A) | | PA (A) | PA (A) | PA (A) | PA(B) | PA (A) | PA (C) |
| Innenschicht (I) | | PA (B) | PA (B) | PA (B) | PA (B) | PA (A) | PA (C) |
| Außenschichtdicke | mm | 0.15 | 0.3 | 0.5 | 0.15 | 0.3 | 0.5 |
| Innenschichtdicke | mm | 1.35 | 1.2 | 1.0 | 1.35 | 1.2 | 1.0 |
| UL 94 | | V0 | V0 | V0 | n.k | V0 | V0 |
| Pendelschlag | % | 0 | 0 | 0 | 0 | 20 | 40 |
| Bruchdehnung (100 mm/min) | % | 270 | 265 | 250 | 290 | 180 | 160 |
| n.k.: nicht klassifizierbar nach UL-94 | | | | | | | |

## Diskussion der Resultate

Die erfindungsgemäßen Beispiele zeigen eine besonders gute Kombination von mechanischen und flammhemmenden Eigenschaften. Nur mit einer Innenschicht aus hydrolysebeständigem Thermoplast ist die Beibehaltung der Mechanik in der Anwendung gewährleistet. Die mechanischen Eigenschaften werden aber deutlich negativ beeinträchtigt, wenn der hydrolysebeständigen Formmasse ein Flammschutzmittel zugesetzt wird. Gute Mechanik lässt sich zwar mit Vergleichsbeispiel 1 erreichen, jedoch auf Kosten von den Flammeigenschaften. Die Zugabe eines Flammschutzmittels wie in VB3 gezeigt, erreicht die beste Einstufung gemäß UL94 von V0, dies aber wieder auf Kosten von der Mechanik.

Nur die erfindungsgemäßen Prüfkörper zeigen hingegen gute mechanische Eigenschaften, wobei gleichzeitig die beste Einstufung nach UL94 von V0 erreicht wird.

## Patentansprüche

1. Fluidtransportleitung enthaltend

    • eine innere, mit einem Fluid in Kontakt tretende Schicht gebildet aus einer mindestens ein aliphatisches Polyamid und mindestens einen Schlagzähmodifikator enthaltenden Formmasse, wobei das mindestens eine Polyamid eine Aminendgruppenkonzentration von 30 bis 90 mmol/kg aufweist, und
    • mindestens eine äußere, mit der inneren Schicht unmittelbar verbundene Schicht gebildet aus einer mindestens ein aliphatisches Polyamid enthaltenden Formmasse mit mindestens einem Flammschutzmittel.

2. Fluidtransportleitung nach Anspruch 1,
**dadurch gekennzeichnet, dass** die Polyamide der inneren und äußeren Schicht ausgewählt sind aus der Gruppe bestehend aus PA12, PA612, PA1010, PA106, PA1016, PA1012, PA 614, PA 615, PA616, PA618, PA1212, PA610, PA11 und deren Copolyamiden, Mischungen und Blends, bevorzugt PA12, PA11, PA610, PA612 und PA11, besonders bevorzugt PA12, wobei die innere und äußere Schicht bevorzugt Polyamide des gleichen Typs enthalten.

3. Fluidtransportleitung nach einem der Anspruch 1 oder 2,
**dadurch gekennzeichnet, dass** die Polyamide eine Amino-Endgruppenkonzentration von 30 bis 80 mmol/kg, bevorzugt von 35 bis 75 mmol/kg und besonders bevorzugt von 40 - 60 mmol/kg aufweisen.

4. Fluidtransportleitung nach einem der Anspruch 1 oder 3,
**dadurch gekennzeichnet, dass** das mindestens eine Flammschutzmittel ein halogenfreies Flammschutzmittel ist, bevorzugt ein organisches Flammschutzmittel und besonders bevorzugt ausgewählt ist aus der Gruppe bestehend aus

- Umsetzungsprodukten von Melamin mit Cyanursäure,
- Kondensationsprodukte von Melamins, insbesondere Melem, Melam, Melon,
- Umsetzungsprodukte von Melamin mit Polyphosphorsäure,
- Umsetzungsprodukte von Kondensationsprodukten des Melamins mit Polyphosphorsäure
- Metallphosphinate
- Phosphorsäureester

und/oder Mischungen hiervon.

5. Fluidtransportleitung nach einem der Ansprüche 1 bis 4,
**dadurch gekennzeichnet, dass** die äußere Schicht von 5 bis 30 Gew.-%, bevorzugt 10 bis 25 Gew.-%, besonders bevorzugt 11 bis 20 Gew.-%, jeweils bezogen auf das Gewicht der Formmasse, des mindestens einen Flammschutzmittels enthält.

6. Fluidtransportleitung nach einem der Ansprüche 1 bis 5,
**dadurch gekennzeichnet, dass** der mindestens eine Schlagzähmodifikator ein funktionalisierten Schlagzähmodifikator ausgewählt aus der Gruppe bestehend aus Ethylen-Propylen-Copolymeren, Ethylen-l-Buten-Copolymeren, Ethylen-Propylen-1-Buten-Copolymeren, Stryol-Copolymeren, Styrol-Blockcopolymeren und Mischungen davon.

7. Fluidtransportleitung nach einem der Ansprüche 1 bis 6,
**dadurch gekennzeichnet, dass** der mindestens eine Schlagzähmodifikator in einer Menge von 0,1 bis 30 Gew.-%, bevorzugt 5 bis 25 Gew.-%, besonders bevorzugt 10 bis 20 Gew.-% in der inneren Schicht enthalten ist.

8. Fluidtransportleitung nach einem der Ansprüche 1 bis 7,
**dadurch gekennzeichnet, dass** die äußere Schicht weitere Additive ausgewählt aus der Gruppe bestehend aus

(i) 0 bis 15 Gew.-%, bevorzugt 2 bis 12 Gew.-%, besonders bevorzugt 4 bis 10 Gew.-% mindestens eines Weichmachers,
(ii) 0,1 bis 2 Gew.-%, bevorzugt 0,2 bis 1,5 Gew.-%, besonders bevorzugt 0,3 bis 1 Gew.-% mindestens eines Stabilisators, insbesondere eines Thermostabilisators,
(iii) 0 bis 5 Gew.-%, bevorzugt 0,1 bis 4 Gew.-%, besonders bevorzugt 0,2 bis 3,5 Gew.-% mindestens eines weiteren Additives ausgewählt aus der Gruppe bestehend aus UV-Stabilisatoren, Wärmeleitfähigkeitsadditiven, Flammschutzsynergisten, Verarbeitungshilfsstoffe, Gleitmittel, Farb- und Markierungsstoffen, anorganische Pigmente, organische Pigmente, IR-Absorber, Intumeszenzmitteln und/oder Mischungen daraus

enthält, wobei die Summe der Additive (i) bis (iii), bezogen auf das Gewicht der Formmasse, von 0,1 bis 22 Gew.-% beträgt.

9. Fluidtransportleitung nach einem der Ansprüche 1 bis 8,
**dadurch gekennzeichnet, dass** die die äußere Schicht bildende Formmasse eine relative Viskosität gemessen gemäß ISO 307 von 1,6 bis 1,9 aufweist.

10. Fluidtransportleitung nach einem der Ansprüche 1 bis 9,
**dadurch gekennzeichnet, dass** die die innere Schicht bildende Formmasse eine relative Viskosität gemessen gemäß ISO 307 von 1,8 bis 2,3 aufweist.

11. Fluidtransportleitung nach einem der Ansprüche 1 bis 10,
**dadurch gekennzeichnet, dass** die äußere Schicht eine Dicke im Bereich von 0,1 bis 1,5 mm, bevorzugt von 0,12 bis 1,4 mm und besonders bevorzugt von 0,15 bis 1,3 mm aufweist.

12. Fluidtransportleitung nach einem der Ansprüche 1 bis 11,
**dadurch gekennzeichnet, dass** die Fluidtransportleitung keine Haftvermittlerschicht zwischen der inneren und äußeren Schicht aufweist und bevorzugt aus der inneren und äußeren Schicht besteht.

**13.** Fluidtransportleitung nach einem der Ansprüche 1 bis 12,
**dadurch gekennzeichnet, dass** das Fluid eine Flüssigkeit, bevorzugt ein Kühlmittel und besonders bevorzugt eine Wasser-Alkohol-Gemisch, insbesondere eine Wasser-Glykol-Mischung ist.

**14.** Fluidtransportleitung nach einem der Ansprüche 1 bis 13,
**dadurch gekennzeichnet dass** die Fluidtransportleitung in Form eines Glattrohrs oder Wellrohrs vorliegt.

**15.** Fluidtransportleitung nach einem der Ansprüche 1 bis 14,
**dadurch gekennzeichnet, dass** die Fluidtransportleitung aus den Formmassen für innere und äußere Schichten durch Koextrusion, Blasformen und Spritzgießen, bevorzugt durch Koextrusion herstellbar sind.

**16.** Verwendung der Fluidtransportleitung nach einem der Ansprüche 1 bis 15 für die Zufuhr einer Flüssigkeit, bevorzugt einer wässrigen Lösung und besonders bevorzugt eines Kühlmittels, insbesondere eines Wasser-Alkohol-Gemischs.

**17.** Verwendung nach Anspruch 16,
**dadurch gekennzeichnet, dass** die Fluidtransportleitung für die Zufuhr eines Fluids in einen Motor oder in eine Batterie, insbesondere für Elektrofahrzeuge verwendet wird.

Europäisches Patentamt
European Patent Office
Office européen des brevets

# EUROPÄISCHER RECHERCHENBERICHT

Nummer der Anmeldung
EP 18 21 4857

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 366 539 A1 (EMS PATENT AG [CH]) 21. September 2011 (2011-09-21)<br>* Absatz [0001] *<br>* Absatz [0028] - Absatz [0031] *<br>* Tabellen 2A, 2B *<br>* Ansprüche 1-24 *<br>----- | 1-17 | INV.<br>B32B27/34<br>B32B1/08<br>C08K5/3492<br>C08K5/523<br>C08L77/02 |
| X<br>A | EP 3 385 074 A1 (MITSUBISHI GAS CHEMICAL CO [JP]) 10. Oktober 2018 (2018-10-10)<br>* Absatz [0001] - Absatz [0008] *<br>* Absatz [0143] - Absatz [0188] *<br>* Tabelle 1 *<br>----- | 1-12,14,15<br>13,16,17 | |
| A | US 2012/040115 A1 (BLONDEL PHILIPPE [FR] ET AL) 16. Februar 2012 (2012-02-16)<br>* Absatz [0121] - Absatz [0132] *<br>----- | 1-17 | |

RECHERCHIERTE SACHGEBIETE (IPC)
C08K
B32B
C08L

Der vorliegende Recherchenbericht wurde für alle Patentansprüche erstellt

1

| Recherchenort | Abschlußdatum der Recherche | Prüfer |
|---|---|---|
| München | 4. Juni 2019 | Laudi, Ines |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 21 4857

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-06-2019

| Im Recherchenbericht angeführtes Patentdokument | Datum der Veröffentlichung | Mitglied(er) der Patentfamilie | Datum der Veröffentlichung |
|---|---|---|---|
| EP 2366539 A1 | 21-09-2011 | CN 102242832 A | 16-11-2011 |
| | | EP 2366539 A1 | 21-09-2011 |
| | | JP 5437299 B2 | 12-03-2014 |
| | | JP 2011189736 A | 29-09-2011 |
| | | US 2011220236 A1 | 15-09-2011 |
| EP 3385074 A1 | 10-10-2018 | CN 108472943 A | 31-08-2018 |
| | | EP 3385074 A1 | 10-10-2018 |
| | | JP WO2017094564 A1 | 13-09-2018 |
| | | KR 20180088371 A | 03-08-2018 |
| | | TW 201728460 A | 16-08-2017 |
| | | US 2018257354 A1 | 13-09-2018 |
| | | WO 2017094564 A1 | 08-06-2017 |
| US 2012040115 A1 | 16-02-2012 | CN 102300930 A | 28-12-2011 |
| | | EP 2382270 A1 | 02-11-2011 |
| | | FR 2941460 A1 | 30-07-2010 |
| | | JP 5607650 B2 | 15-10-2014 |
| | | JP 2012516368 A | 19-07-2012 |
| | | JP 2014208820 A | 06-11-2014 |
| | | KR 20110105850 A | 27-09-2011 |
| | | KR 20140069347 A | 09-06-2014 |
| | | KR 20160027226 A | 09-03-2016 |
| | | TW 201041974 A | 01-12-2010 |
| | | US 2012040115 A1 | 16-02-2012 |
| | | WO 2010086546 A1 | 05-08-2010 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1265749 A
- JP 1269536 A